Europäisches Patentamt

European Patent Office

Office européen des brevets

(11) Publication number: **0 185 373 B1**

# EUROPEAN PATENT SPECIFICATION

(45) Date of publication of patent specification: **04.03.92**  (51) Int. Cl.⁵: **B01D  69/12**, B01D  67/00

(21) Application number: **85116216.4**

(22) Date of filing: **19.12.85**

(54) Supported microporous membrane and method of making.

(30) Priority: **21.12.84 US 685042**

(43) Date of publication of application:
**25.06.86 Bulletin  86/26**

(45) Publication of the grant of the patent:
**04.03.92 Bulletin  92/10**

(84) Designated Contracting States:
**DE FR IT NL SE**

(56) References cited:
EP-A- 0 150 979     DE-A- 2 423 252
DE-A- 2 737 756     US-A- 3 811 957
US-A- 4 340 479     US-A- 4 399 183

(73) Proprietor: **PALL CORPORATION**
**30 Sea Cliff Avenue**
**Glen Cove New York 11542(US)**

(72) Inventor: **Degen, Peter John**
**24 Glades Way**
**Huntington New York 11743(US)**
Inventor: **Gsell, Thomas Charles**
**9 Grace Lane**
**Levitton New York 11756(US)**

(74) Representative: **Brehm, Hans-Peter, Dr.**
**Dipl.-Chem. et al**
**Patentanwälte Kern, Brehm & Partner Albert-Rosshaupter-Strasse 73**
**W-8000 München 70(DE)**

**Description**

This invention relates to supported microporous membranes particularly useful in filtration applications. In addition, this invention concerns a process for preparing such membranes. Further, this invention concerns several modes of use of such membranes.

The document US-A-4 399 183 discloses a web-supported membrane, which may be used as ion exchange membrane in electrolytic processes such as the chloralkali electrolysis. A process of preparing the known web-supported membrane includes the steps of

- continuously bringing at least two films of melt-fabricable fluorinated polymer and a web of reinforcing material into face-to-face contact;
- applying heat to the two outermost opposite planar film surfaces for a sufficient time to cause the support material, which is in contact with said film to become completely encapsulated within the film of fluorinated polymer while heating the film and support material at a temperature of from 240 to 320°C;
- cooling the resulting reinforced membrane.

The known web is a woven reinforcing fabric comprising warp and fill strands. Fabrics prepared from either monofilament or from multistranded yarns can be used. The individual reinforcing fibers can be made from conventional material, since their main purpose is to strengthen the membrane. Due to chemical inertness, reinforcement materials made from perfluorinated polymers are said to be preferred. An example of a most preferred reinforcement material is polytetrafluoroethylene. Other reinforcing members in sheet-like form can also be used, including for example netting of various polymers such as polypropylene or oriented polyethylene, and fiberglass. In any case, the known reinforcing material is an already prepared woven fabric or expanded mesh or netting.

Insofar, said document disclosed a supported microporous membrane comprising a composite of a microporous membrane and a synthetic thermoplastic polymeric web of fibers secured to said membrane by the action of heat without any use of added adhesive components.

Many filtration applications require the removal of particles in the micron and submicron ranges from a fluid medium. Microporous filtration media employed for such purposes are typically relatively delicate structures which are easily damaged. For example, US-A-4 431 545 disclosed a hydrophilic, microporous filter system having ultrafiltration capability, i.e., the ability to remove particles as fine as about 0,001 $\mu$m (micrometer) up to about 10 $\mu$m. A preferred filter medium for use in the system of US-A-4 431 545 is a thin, typically a few 1/100 mm thick, for example a few mils (1 mil = 0,0254 mm) thick, microporous polyamide membrane. This membrane is difficult to work with because of its limited strength and its lack of internal rigidity. In many other similar uses, the microporous membranes used are also thin, relatively delicate structures with little internal rigidity and very low flexural moduli, i.e., they do not retain their shape when unsupported, typically hanging limply in loose folds, much as a piece of thin cloth drapes when unsupported.

The combination of their relatively delicate nature (limited strength) and lack of internal rigidity (low flexural modulus or modulus of flexure) creates difficulties in working with such membranes, e.g., in corrugating them to increase the surface area available in a filter element or the like.

One approach used to overcome these difficulties is to cast the membrane, e.g., by the method described in US-A-4 340 479, onto a substrate, such as a fibrous web or mat, which is incorporated into the membrane and becomes a permanent part of the structure, thereby enhancing both the strength and the flexural modulus of the membrane. Said document does not provide any hint that the composite structure of membrane and substrate may be heated in order to increase adherence between membrane and substrate. Offsetting the desirable increase in strength and flexural modulus is an undesirable increase in the pressure drop of membrane.

For example, polyamide membranes having an absolute pore rating of 0,2 $\mu$m are commercially available from Pall Corporation under the trademark ULTIPOR. For an unsupported (i.e., no internal fibrous mat support) double layer membrane of this type, the pressure drop at an air flow rate of 8,5 m/min (28 ft/min) is 304 mbar (nine inches of mercury). For an equivalent supported, double layer membrane with the same pore rating, the pressure drop is 844 mbar (twenty-five inches of mercury), nearly a three-fold increase. This pressure drop difference is highly significant in the operation of an online filtration system. For example, in the pharmaceutical industry, efficient, fast filtration at reasonable pressure levels is often important in the processing of sensitive compositions such as parenterals. With the particular polyamide membranes described above, the time to filter a typical pharmaceutical industry fluid at a specified pressure would be 2,8 times longer for the supported membrane with clean membranes and relatively low contaminant levels in the fluid being filtered. For this reason, in many applications the unsupported membrane is highly preferred. Offsetting the advantage of lower pressure drops with concomittant higher filtration rates at comparable pressures is the difficulty in working with the delicate, low strength, low flexural modulus of the unsupported membrane. Care must be exercised in handling the delicate material since it is relatively easily damaged and any form of crack of tear, even a minor one, will render such material essentially useless as a filtration medium.

The difficulty of working with such delicate materials is further evidenced by the commercial unavailability in flat disc form of thin, fine pored, polytetrafluoroethylene (PTFE) membrane material - a highly desirable filtration medium for many applications. In addition to having a low flexural modulus and limited strength, PTFE and similar membrane materials have a tendency to become electrostatically charged. Such a material sticks to itself in a manner making it very difficult to maintain in flat or planar disc form. Additionally, because of the low flexural modulus and the difficulty in sealing PTFE membrane to support materials, e.g., a polypropylene housing, it is difficult to manufacture filter structures incorporating this type of membrane in such housings. For example, in biomedical applications it is often desired to insert a precut flat or planar filter piece into a preformed support structure and tightly seal the periphery of the filter piece to the support structure. Unsupported PTFE can not readily be used in such a manner because of its low flexural modulus, which makes accurate placement troublesome, and the difficulty in sealing it to the support structure.

It is an object of the present invention to provide a supported microporous membrane and to state a method of manufacturing thereof, which membrane substantially overcomes the difficulties described above in working with such relatively low strength, low flexural modulus membranes, and which supported membrane has good filtration performances such as low differential pressure and nearly no increase of pressure drop.

In accordance with a first aspect of the subject invention, there is provided a supported microporous membrane comprising a composite of a microporous membrane and a synthetic thermoplastic polymeric web of microfibers secured to said membrane by the action of heat without any use of added adhesive components, wherein said microfibers have been deposited on said microporous membrane in an as fresh extruded and attenuated state having an elevated temperature which is slightly above the melting point of the thermoplastic polymeric material used to form said microfibers.

According to a preferred embodiment of said supported microporous membrane said polymeric web of microfibers is secured to said web with an ASTM D903 peel strength of at least 2 Newton per meter and the modulus of flexure of said supported microporous membrane is at least 10 percent greater than that of said membrane.

Preferably, said microporous membrane is made of a material selected from the class consisting of polyamides, perfluorinated polyolefins, polysulfone, polyvinylidene chloride, and cellulose esters.

According to an even more preferred aspect, said microporous membrane is made of a material selected from the class consisting of polytetrafluoroethylene, polyvinylidene difluoride and nylon 66, and said microfibers are comprised of a polyolefin, especially polypropylene.

The supported microporous membrane according to the present invention may comprise a thermoplastic polymeric web of microfibers on both sides of said microporous membrane.

The present invention provides a novel and inventive concept of securing said web of microfibers to said microporous membrane in so far, as the microfibers are deposited on said microporous membrane in an as fresh extruded and attenuated state having an elevated temperature, which is slightly above the melting point of the thermoplastic polymeric material used to form said microfibers. Surprisingly, said microporous membranes which are notoriously known as relatively delicate structures having limited strength and little internal rigidity, will withstand impingement of said hot microfibers. The obtained composite structure shows a surprisingly small increase of pressure drop with respect to the single unsupported membrane and a several times better filtration life compared with the base membrane alone. The composite structure according to the present invention has a substantial peel strength and only a slight increase in differential pressure. It also has a substantial increase in rigidity as reflected by a larger modulus of flexure and, correspondingly, better ability to be handled in comparison with the PTFE membrane itself, which is a relatively limp, difficult material to work with. The increase in rigidity and corresponding increase in the ability to work with, the structure makes the composite structure according to the present invention very useful as a flat filtration medium. From the standpoint of filtration performance, the composite structure according to the present invention was found to have a much greater capacity for the removal of aerosol as evidenced by tests stated in the following examples.

In accordance with a second aspect of the subject invention, a method is stated of manufacturing a supported microporous membrane comprising a microporous membrane, which is supported on at least one side thereof by a synthetic thermoplastic polymeric web of microfibers, wherein said web of microfibers being secured to said membrane by the action of heat without any use of added adhesive components. Said new method is characterized by the following steps:

(a) extruding a synthetic thermoplastic polymeric material from a fiberizing die and attenuating said extruded polymeric material to form said microfibers by the application of one or more gas streams;

(b) directing said microfibers toward a sheet of said microporous membrane;

(c) contacting said microfibers with said microporous membrane while said microfibers have a temperature slightly above the melting point of the thermoplastic polymeric material used to form said microfibers; and

(d) cooling the resulting composite structure to form said supported microporous membrane.

Further, the supported microporous membrane according to the present invention provides specific advantages in certain filtration applications. Especially, said supported microporous membrane may form a filtration medium of a filter element. In said aspect, it is preferred to use said supported microporous membrane in the form of a flat disc. According to another preferred use, the supported microporous membrane may form an insulation structure, or an essential part thereof. For example, said supported microporous membrane may form a component of clothing, especially winter clothing such as skiwear.

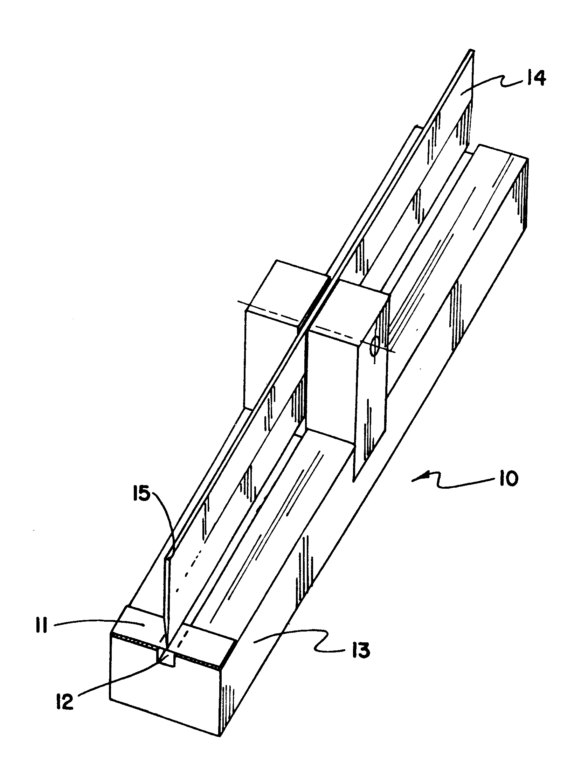

Figure 1 is an illustration of the device used in determining the flexural modulus of the supported microporous membranes in accordance with this invention.

The supported microporous membranes in accordance with this invention are produced by the use of a continuous, melt-blowing process to form the desired microfibers which are then contacted with the microporous membrane. In preparing the microfibers, a heated thermoplastic resinous material, such as polypropylene, one of the preferred materials, is forced through the die head having a row of die openings and the extruded material is attenuated in a gas stream formed by gas jets adjacent the die openings. The attenuation of the thermoplastic resinous material results in very fine fibers, for example, as fine as 0,1 $\mu$m ranging up to 25 $\mu$m preferably in the range of from 1 to 15 micrometers, and more preferably in the range of from 1,5 to 10 $\mu$m.

A substantial body of art has developed over the past twenty-five years directed to the preparation of very fine fibers by this general process. Early work in the area was done at the Naval Research Laboratory and is reported in, for instance, Industrial and Engineering Chemistry, Volume 48, Number 8 (1956), pages 1342-1346. Relevant patents disclosing appropriate apparatus and discussing processing variables, including methods for controlling the level of attenuation of the fibers, the density of the formed mats and the like, include US-A-3 811 957, US-A-3 849 241, US-A-3 825 379, US-A-3 825 380, and US-A-3 933 557. The general method described in these references is used in preparing the microfibers used in preparing the supported microporous structures in accordance with the subject invention.

The supported microporous membranes in accordance with the subject invention are prepared by carrying a continuous sheet of the microporous membrane past one or more fiber-forming stations in a continuous fashion with the fibers, as they are extruded and attenuated, being directed to impinge on the microporous membrane as it passes at a preset distance past the fiber-forming station.

Depending on the desired level of lay down of the microfibers on the microporous membrane, more than one fiber-forming station may be used in sequence with the web passing continuously past the fiber-forming stations in sequence. If a structure comprising the microporous membrane with a thermoplastic web of microfibers on both sides thereof is desired, the intermediate composite of microfibers and the microporous membrane formed in the first pass can be turned over and passed adjacent the fiber-forming station or stations a second time to provide the three layer composite structure.

The manner of lay down of the microfibers on the microporous membrane is controlled to provide the desired thickness or amount of the microfibers secured to the web and the desired degree of fineness of the fibers. Additionally, to ensure adequate adhesion of the microfibers to the microporous membrane, it is critical that at least a portion of the microfibers, at the time of impingement on the microporous membrane, be at an elevated temperature sufficient to provide the thermoplastic microfibers with a viscosity low enough that the resin retains the ability to flow to at least a limited extent in order that adequate adhesion between the microfibers and the microporous membrane is attained. The requisite temperature is slightly above the melting point of the thermoplastic used to form the microfibers. In practice, the degree of adhesion and, hence, the peel strength, can be varied by adjusting various factors, for example, the distance between the fiberizing die and the microporous web.

The supported microporous membranes in accordance with this invention comprise a composite of the microporous membrane and a synthetic thermoplastic web of microfibers secured to the membrane without the use of added adhesive components. Preferably, they have an ASTM D903 peel strength of at least two Newtons per meter, more preferably from 4,9 to 29 Newtons per meter, and most preferably from 20 to 29 Newtons per meter. It should be noted that, for most applications, there is no maximum limit peel strength.

Indeed, it has been found that in some applications the peel strength or adhesive strength between the microfibers and the microporous membrane is greater than the cohesive strength of the web of microfibers itself or of the microporous membrane and, when attempts are made to separate the web of microfibers from the microporous membrane, the bonds between the microfibers of the web will separate or the integrity of the microporous membrane will be destroyed before the bonds between the microfibers and the microporous membrane are broken.

The supported microporous membranes in accordance with the subject invention also have flexural moduli which are preferably at least ten percent, and more preferably one hundred percent or more, greater than the microporous membrane.

Definition and Measurement of the Modulus of Flexure:

This test measures the ability of the test specimen to resist flexural deformation. This ability is particularly important, when the filter membrane is formed into pleated structures, such as those commonly used in filtration devices.

The test is performed on a specimen of the test material which is 25,4 mm (1,0 inch) in length and by 6,4 mm (0,25 inch) in width. One or more layers having these dimensions are tested in the manner described below.

The test specimen is placed in the test device 10 depicted in Figure 1. The specimen 11 is placed across and at the end of the channel or groove 12 in the base 13 of the test device 10. The dimensions of the channel are 3,8 mm (0,15 inch) wide and 1,6 mm (1/16th inch) deep. V-shaped blade 14 150 mm (6 inches) long, 19 mm (3/4 inch) high, 91 $\mu$m (0,0036 inch) thick at the top and tapering to a knife edge at the bottom edge) pivoted at the center, i.e., 76 mm (3 inches) from either end and on a center line 5,1 mm (0,2 inches) below the top edge of the blade, is positioned centrally over and parallel to the channel 12 at a height such that the bottom of the V-shaped bar is 0,71 mm (0,028 inch) above the top of the channel (when the bottom edge of the V-shaped bar is parallel to the channel). A downward force W is applied to the top of the V-shaped bar 14 at 15 with the magnitude of the force measured by a force gauge (not shown). Coincident with the application of the measured force, the vertical deflection, D, is accurately measured by means of a microscope equipped with a scaled eye piece. The applied force and the deflection must not be so great as to cause a permanent set of the test sample, i.e., at the end of the test the specimen should resume its original flat form.

In the calculations below, the width of the channel 12 is given as L, W is the force applied, and D is the vertical deflection of the membrane at its center. The number of layers tested is n.

For purposes of this invention, the term flexural modulus or modulus of flexure is defined in a different sense than the usual symbol, E, which is the elastic modulus in conventional mechanical engineering stress calculations. Flexural modulus, M, as defined herein, relates more closely to a quantity defined in usual engineering terms as EI, the product of the elastic modulus E, and the moment of inertia I. This is necessary because of the composite nature of the structures in accordance with the subject invention.

In terms of the test described above, EI will be denoted as M and is equivalent to EI as defined in Case 2, pages 412-413 of the 20th edition of "Machinery's Handbook", Industrial Press 200 Madison Avenue, New York, New York 10016. It is calculated as follows:

$$M = WL^3/48 \, Dn$$

As opposed to the behavior of a metal when deformed purely elastically, the value of M for a composite may vary somewhat depending on the deflection at which it is measured. For this reason, the deflection at which M is determined must be reported along with the value of M.

The unsupported microporous membranes useful in the subject invention typically have flexural moduli, determined as described above, ranging from less than $2,9 \times 10^{-5}$ to $2,9 \, 10^{-1}$ N-cm$^2$ (from less than $10^{-6}$ to $10^{-2}$ lb-in$^2$). The unsupported membranes typically have thicknesses ranging from 12,7 to 203 $\mu$m (0,5 to 8 mils), more preferably from 25,4 to 101,6 $\mu$m (1 to 4 mils), and voids volumes ranging from 70 to 85 percent. It is these high voids volumes which provide the desirable low pressure drops of the membranes. Conversely, it is the high voids volumes which contribute to the relatively low strength and low moduli of flexure.

Typically, the supported microporous membranes in accordance with the subject invention have moduli of flexure, determined as described above, in the range of from $2,9 \times 10^{-5}$ to $2,9 \times 10^{-1}$ N-cm$^2$ ($10^{-6}$ to $10^{-2}$ lb-in$^2$), more preferably from $8,6 \times 10^{-5}$ to $8,6 \times 10^{-2}$ N-cm$^2$ ($3 \times 10^{-6}$ to $3 \times 10^{-3}$ lb-in$^2$).

The flexural modulus is, of course, in part determined by the amount of the microfibrous thermoplastic material laid down on the microporous membrane. For some applications, only a minimum thickness of the microfibers is desired since an absolute minimum increase in pressure drop is desired and only minimal increase in flexural modulus is required. This type of structure is useful where the primary concern is the sealing of the microporous membrane to a support structure. More typically, the amount of the microfibers laid down on the microporous membrane will be such as to provide a thickness of the supporting web of microfibers of as much as fifteen times or even more the thickness of the microporous membrane itself, typically ranging from five to fifteen times the thickness of the membrane. If a substantial quantity of microfibers is laid down, the resulting composite may be sufficiently rigid or board-like to enable it to be used as a filter medium capable of bridging relatively large spans without auxiliary support. Typically, the microfibers are secured to the microporous membrane in an amount of from 2,2 to 108 grams of microfibers per square meter of porous membrane (0,2 to 10,0 grams of microfibers per square foot of porous membrane).

While it is possible to achieve higher flexural moduli and, hence, higher rigidity by thickening the microporous membrane , such thickening is, for many applications, undesirable because it increases pressure drop and, in most cases, also increases cost.

The composite structures in accordance with the present invention can be tailored to form a range of products with varying desirable properties. For example, if it is desired to minimize any increase in pressure drop resulting from adhering the microfibrous web to the membrane, a very thin layer of fibers can be secured to the membrane. The resulting composite structure will have essentially no increase in pressure drop and a limited increase in flexural modulus. However, it will be much more readily secured to a typical filter support structure. For example, by adhering a monolayer of polypropylene microfiber to a PTFE microporous membrane, the resulting structure, e.g., in the form of a flat circular disc, can easily be secured about its periphery to a polypropylene filter support structure by simple application of heat or ultrasonic energy together with light pressure.

Conversely, if a relatively thick layer of microfibers is secured to the membrane, the web of the microfibers can function as a prefilter in liquid filtering applications to avoid early loading of the relatively fine microporous membrane, thereby increasing filter life.

Composite structures in accordance with this invention may also find application as insulation structures, particularly for clothing. By judicious selection of the microporous membrane and the amount of microfibers secured to the membrane, a desirable insulating structure can be achieved. For example, in the insulation of winter clothing, e.g., skiwear, the combination of a water-repellent microporous PTFE membrane and polypropylene microfibers would be desirable, the PTFE membrane allowing the structure to breathe by virtue of its microporous structure while precluding the passage of water by virtue of its nonwettability and the polypropylene microfiber web providing insulation capability. The microfibrous web/microporous membrane composite can be secured to a layer of the cloth if desired.

The composite structures in accordance with the subject invention which can be formed without the use of added adhesive components have the added advantage of being substantially free of media migration which can occur when adhesives are used in filter media. This advantage is important in many applications such as the filtration of water supplied for critical applications in industry and the medical field, e.g., microelectronics manufacture and water used for injection into humans.

Suitable microporous membranes which can be used in accordance with the subject invention include membranes prepared from a variety of synthetic polymeric materials, including polyamides, polytetrafluoroethylene and other perfluorinated polyolefins, polyvinylidene difluoride, polysulfone, polyvinylidene chloride, cellulose esters, and the like. Typically, these materials will have pore sizes ranging from less than 0,001 to 10 $\mu$m (micrometer) or more. A preferred class of such membranes are the unskinned polyamide membranes of the type described in U.S. Patent 4,340,479. Other membranes which can be used are the charge-modified membranes disclosed in the EP-A- 0090483 and 0087228, the polyvinylidene difluoride membranes of the type disclosed in U.S. Patents 4,203, 847 and 4,203,848, and polytetrafluoroethylene membrane prepared as generally described in U.S. Patents 3,953,566 and 4,187,390.

A variety of thermoplastic resinous materials may be used to form the microfibers used in the invention. Exemplary materials include polyamides, linear polyesters, such as esters of ethylene glycol and terephthalic acid, polyolefins, such as polypropylene, polyethylene, polymethyl pentene, and polyisobutylene, as well as copolymers, such as ethylene-propylene. Mixtures or blends of such polymers can also be used.

The subject invention will be better understood by reference to the following examples, which are offered by way of illustration.

Examples:

The following general procedures were used to prepare and test supported microporous structures of the type described above. Structures were prepared by the general method described above by depositing polypropylene microfibers having an average diameter of about 5 $\mu$m onto thin porous membranes (as described in Table I below). The operating conditions in depositing the polypropylene microfibers on the membrane were adjusted such that a portion of the polypropylene was above its melting point of about 170$^\circ$C at the time of the contact with the membrane, and 27 grams per square meter (2,5 grams per square foot) of microfibers were deposited on the membrane.

In Example 1, the PTFE membrane, in the form of a continuous sheet 102 cm (40 inches) in width, was carried past fiber-forming stations to form the composite supported microporous membrane or structure and the resulting composite structure was collected as a roll. The supported membranes of Examples 2 and 3 were prepared by exposing a small piece 930 cm$^2$ (about 1 ft$^2$) of the respective membrane to a fiber-forming station until the same level 26,9 grams per square meter (2,5 grams per square foot), as in Example 1) of polypropylene microfibers was deposited.

Samples of the resulting composite structure were tested for various properties important to its use as a filtration medium. These included peel strength, tensile strength, pressure drop, modulus of flexure, filtration efficiency and resistance to clogging.

TABLE I

| Example | Description of Membrane |
|---------|-------------------------|
| 1 | Polytetrafluoroethylene (PTFE) having an average pore size of about 0,2 $\mu$m and a thickness of about 51 $\mu$m (0,002 inch). |
| 2 | Nylon 66 having an average pore size of about 0,2 $\mu$m and a thickness of about 150 $\mu$m (0,006 inch). |
| 3 | Polyvinylidene difluoride having an average pore size of about 0,1 $\mu$m and a thickness of about 51 $\mu$m (0,002 inch). |

The test methods and the results obtained are set out below.

A. Peel Strength:

This test was carried out in accordance with ASTM D903 using 13 mm (one-half inch) wide strips of the subject composite material, tested in the machine direction. The results are set out in Table II below:

TABLE II

| Example | Peel Strength (N/m width) |
|---------|---------------------------|
| 1 | 26,2 |
| 2 | Web of polypropylene microfibers pulled apart rather than peeling off membrane |
| 3 | Web of polypropylene microfibers pulled apart rather than peeling off membrane. |

B. Pressure Drop:

This test was carried out by fixing a sample of the material being tested in a jig which allows passage of air through the sample at a measured velocity while the differential pressure is measured. In this test the differential pressure was measured while maintaining a flow rate of 8,5 m/min (28 feet per minute) of air (at ambient conditions) through the specimen being tested, i.e., either the base membrane by itself or the corresponding supported membrane. The results are set out in Table III below.

7

## TABLE III

| Example | Specimen Tested | Pressure drop (mbar) |
|---|---|---|
| 1 | Membrane alone | 34 |
|  | Supported Membrane (composite Structure) | 34,5 |
| 2 | Membrane alone | 31,4 |
|  | Supported Membrane (Composite Structure) | 31,8 |
| 3 | Membrane alone | 43,5 |
|  | Supported Membrane (Composite Structure) | 43,5 |

As can be seen from Table III, the increase in pressure drop was quite small in all three examples. In Example 3 there was no increase.

C. Flexural Modulus

This test was carried out using the device described in Figure 1 and the method described above under the heading "Definition and Measurement of the Modulus of Flexure". The deflection D was, in each case, 64 $\mu$m (0,0025 inch). The flexural modulus for the multilayer tests was performed with the microporous membrane on the upper surface, as would be the case in many types of filtration service. The results are set out in Table IV below:

## TABLE IV

| Example | | n | W (mN) | M (mN-cm$^2$) |
|---|---|---|---|---|
| 1 | Membrane alone | 16 | 9,8 | 0,11 |
|  | Supported Membrane (Composite Structure) | 1 | 7,8 | 1,4 |
| 2 | Membrane alone | 3 | 8,8 | 0,53 |
|  | Supported Membrane (Composite Structure) | 1 | 6,9 | 1,23 |
| 3 | Membrane alone | 2 | 5,9 | 0,53 |
|  | Supported Membrane (Composite Structure) | 2 | 7,8 | 0,70 |

As can be seen from Table IV, the modulus of flexure of the membrane was increased substantially in each case by compositing it with the microfibrous web.

D. Filtration Efficiency/Clogging Resistance:

This test was performed by challenging the particular medium being tested, i.e., the composite structure or the PTFE membrane alone, with a 0,3 $\mu$m diameter aerosol of dioctylpthalate (DOP) using test device, DOP Penetrometer Model Q-127, available from Air Techniques Incorporated. The concentration of aerosol applied to the test medium was fixed at about 0,08 mg (milligrams) per liter. The velocity of the aerosol (in air) through the medium being tested was 0,85 m per minute (2,8 feet per minute). The filtration efficiency was measured and expressed as percent of the aerosol penetrating through the test medium. The pressure drop across the sample was measured in each case when the quantity of aerosol incident on the filter medium reached 1,5 grams. The microporous membrane was downstream during these tests. The ratio of that pressure drop to the clean pressure drops, along with the measure of penetration, is set forth in Table V below:

TABLE V

| Sample | Ratio of Pressure Drop at End of Test to Pressure Drop at Start | Percent Penetration By Weight |
|---|---|---|
| PTFE membrane only | 3,5 | 0,0005 |
| PTFE membrane/microfiber composite of Example 1 (microfibers upstream) | 1,23 | 0,0001 |
| PTFE membrane preceded by a microfiber filter of the same type as that used in making the composite structure but not adhered to the membrane | 1,35 | 0,0002 |

The results of these tests show that the composite structure in accordance with the subject invention is superior to both the PTFE membrane alone as well as a non-adhered PTFE membrane/microfiber combination. Specifically, the composite structure in accordance with the subject invention has a substantial peel strength and only a slight increase in differential pressure. It also has a substantial increase in rigidity, as reflected by a larger modulus of flexure, and, correspondingly, better ability to be handled in comparison with the PTFE membrane itself, which is a relatively limp, difficult material to work with. The increase in rigidity and corresponding increase in the ability to work with the structure makes the composite structure in accordance with the subject invention very useful as a flat filtration medium or for use in the formation of pleated (corrugated) filtration structures.

From the standpoint of filtration performance, the composite structure in accordance with the subject invention was found to have a much greater capacity for the removal of aerosol, as evidenced by the results set out in Table V, as well as greater efficiency for removal.

Filter Lifetime Test:

This test measures the ability (capacity) of a filtration membrane to filter a fluid while maintaining a differential pressure of less than 1,4 bar (20 psi) across the membrane. A constant flow rate of 0.32 ml/min-$cm^2$ (300 ml/min-$ft^2$) was maintained throughout the test. A rise in differential pressure was noted as the test progressed. When a 1,4 bar (20 psid) differential pressure (pressure drop) was reached, the test was stopped and the total volume of filtered fluid was measured.

The fluid filtered in this test was prepared by dissolving 0,5 grams of hydroxyethylcellulose (QP100M available from Union Carbide Corporation) in 1,0 liter of deionized water. In this test an effective area of 19 $cm^2$ (0,02 square feet) was used with a flow rate of 6 ml (milliliters) per minute. The results are set out in Table VI below:

TABLE VI

|  | Total Volume Fluid Filtered (ml) |
|---|---|
| A. PTFE Supported Membrane (Composite Structure) of Example 1 (microfibers upstream) | 108 |
| B. PTFE Base Membrane only | 23 |

The composite provided a filtration life of over four times that of the base membrane alone.

Tensile Strength Test:

Composite filter membranes of the subject invention were tested for ultimate tensile strength in accordance with ASTM D882 using 13 mm (0,5 inch) wide strips. For comparison, the base membranes used to prepare the composites were also tested, i.e., without an adhered layer of polymer microfiber. The results are set out in Table VII below.

## TABLE VII

| Example | Tensile Strength |
|---|---|
| 1. PTFE Composite Structure | 8,2 N/cm |
| PTFE Membrane only | 3,8 N/cm |
| 2. Nylon 66 Composite Membrane | 13,7 N/cm |
| Nylon 66 Membrane only | 7,0 N/cm |
| 3. Polyvinylidene difluoride Composite Membrane | 9,8 N/cm |
| Polyvinylidene difluoride Membrane only | 6,0 N/cm |

The composite structures had tensile strengths at least 65 percent greater than the base membranes alone.

## Claims

1. A supported microporous membrane comprising a composite of a microporous membrane and a synthetic thermoplastic polymeric web of microfibers secured to said membrane by the action of heat without any use of added adhesive components, characterized in that said microfibers have been deposited on said microporous membrane in an as fresh extruded and attenuated state having an elevated temperature which is slightly above the melting point of the thermoplastic polymeric material used to form said microfibers.

2. The supported microporous membrane according to claim 1, characterized in that said polymeric web of microfibers is secured to said web with an ASTM D903 peel strength of at least 2 Newton per meter and the modulus of flexure of said supported microporous membrane is at least 10 percent greater than that of said membrane.

3. The supported microporous membrane according to claim 1 or 2,

13

EP 0 185 373 B1

characterized in that
said microporous membrane is made of a material selected from the class consisting of polyamides, perfluorinated polyolefins, polysulfone, polyvinylidene chloride, and cellulose esters.

4. The supported microporous membrane according to any of claims 1 to 3,
   characterized in that
   said microporous membrane is made of a material selected from the class consisting of polytetrafluoroethylene, polyvinylidene difluoride and nylon 66, and said microfibers are comprised of a polyolefin, especially polypropylene.

5. The supported microporous membrane according to any of claims 1 to 4,
   characterized in that
   said composite comprises a thermoplastic polymeric web of microfibers on both sides of said microporous membrane.

6. A method of manufacturing a supported microporous membrane comprising a microporous membrane, which is supported on at least one side thereof by a synthetic thermoplastic polymeric web of microfibers,
   wherein said web of microfibers being secured to said membrane by the action of heat without any use of added adhesive components, characterized by the following steps:
   (a) extruding a synthetic thermoplastic polymeric material from a fiberizing die and attenuating said extruded polymeric material to form said microfibers by the application of one or more gas streams;
   (b) directing said microfibers toward a sheet of said microporous membrane;
   c) contacting said microfibers with said microporous membrane while said microfibers have a temperature slightly above the melting point of the thermoplastic polymeric material used to form said microfibers; and
   (d) cooling the resulting composite structure to form said supported microporous membrane.

7. The method according to claim 6,
   characterized in that
   said polymeric web of microfibers is secured to said membrane so as to give an ASTM D903 peel strength of the web of microfibers of at least 2 Newton per meter, and so as to give said supported microporous membrane a modulus of flexure at least 10 percent greater than that of said membrane, and that there is used a microporous membrane made of a material selected from the class consisting of polyamides, perfluorinated polyolefins, polysulfone, polyvinylidene chloride, and cellulose esters.

8. The method according to claim 6 or 7,
   characterized in that
   there is used a microporous membrane made of a material selected from the class consisting of polytetrafluoroethylene, polyvinylidene difluoride and nylon 66, and
   that said microfibers are made of a polyolefin.

9. A use of the supported microporous membrane according to anyone of the claims 1 to 5,
   wherein said supported microporous membrane comprises the filtration medium of a filter element.

10. The use according to claim 9,
    wherein said supported microporous membrane is in the form of a flat disc.

11. A use of the supported microporous membrane according to anyone of the claims 1 to 5,
    wherein said supported microporous membrane is an insulation structure.

12. The use according to claim 11,
    wherein said supported microporous membrane comprises a component of clothing, especially winter clothing such as skiwear.

**Revendications**

1. Une membrane microporeuse supportée

14

comprenant un matériau composite d'une membrane microporeuse et un non-tissé synthétique thermoplastique et polymère de microfibres, qui est fixé sur la membrane thermiquement sans aucune addition de composants de colle,
caractérisée en ce que
les microfibres ont été appliquées sur la membrane microporeuse en état fraîchement extrudé et chevillé et avec une température élevée qui est légèrement supérieure au point de fusion du matériau thermoplastique polymère, servant à la fabrication des microfibres.

2. La membrane microporeuse supportée suivant la revendication 1,
caractérisée en ce que
le non-tissé polymère de microfibres est fixé sur la membrane avec une résistance au pelage (déterminée selon ASTM D903) d'au moins 2 Newton par mètre; et
que le module de flexion de la membrane microporeuse supportée est d'au moins 10 % plus grand que celui de la membrane seule.

3. La membrane microporeuse supportée suivant la revendication 1 ou 2,
caractérisée en ce que
la membrane microporeuse est faite en un matériau sélectionné parmi le groupe comprenant les polyamides, les polyoléfines perfluorurées, le polysulfone, le polyvinylchlorure et les esters de cellulose.

4. La membrane microporeuse supportée suivant l'une des revendications 1 à 3,
caractérisée en ce que
la membrane microporeuse est faite en un matériau sélectionné parmi le groupe comprenant le polytetrafluoroéthylène, le polyvinylidènedifluorure et le nylon 66; et
que les microfibres consistent d'une polyoléfine, notamment de polypropylène.

5. La membrane microporeuse supportée suivant l'une des revendications 1 à 4,
caractérisée en ce que
le matériau composite présente sur les deux faces de la membrane microporeuse un non-tissé thermoplastique polymère de microfibres.

6. Un procédé de fabrication d'une membrane microporeuse supportée comprenant une membrane microporeuse dont au moins une face est supportée par un non-tissé synthétique thermoplastique polymère de microfibres,
le non-tissé de microfibres étant fixé sur la membrane thermiquement sans aucune addition de composants de colle,
caractérisé par les étapes suivantes:
(a) extrusion d'un matériau synthétique, thermoplastique, polymère par une filière et chevillage du matériau extrudé polymère en vue de produire les microfibres par application d'un ou de plusieurs flux de gaz;
(b) direction des microfibres vers une feuille de la membrane microporeuse;
(c) mise en contact des microfibres avec la membrane microporeuse tant que les microfibres ont une température légèrement supérieure au point de fusion du matériau thermoplastique polymère utilisé pour la fabrication des microfibres;
(d) refroidissement de la structure composite en vue de former la membrane microporeuse supportée.

7. Le procédé de fabrication suivant la revendication 6,
caractérisé en ce que
le non-tissé polymère de microfibres est fixé sur la membrane de sorte à ce que la résistance au pelage conformément à ASTM D903 soit d'au moins 2 Newton par mètre et que le module de flexion de la membrane microporeuse supportée soit au moins 10 % plus grande que celui de la membrane seule et que la membrane microporeuse est faite en un matériau sélectionné parmi le groupe comprenant les polyamides, les polyoléfines perfluorurées, le polysulfone, le polyvinylchlorure et les esters de cellulose.

8. Le procédé de fabrication suivant la revendication 6 ou 7,

EP 0 185 373 B1

caractérisé en ce que
la membrane microporeuse est faite en un matériau sélectionné parmi le groupe comprenant le polytetrafluoroéthylène, le polyvinylidènedifluorure et le nylon 66; et
que les microfibres sont faites en une polyoléfine.

9. Un emploi de la membrane microporeuse supportée suivant l'une des revendications 1 à 5,
la membrane microporeuse supportée formant le moyen filtreur d'un élément filtrant.

10. L'emploi suivant la revendication 9,
la membrane microporeuse supportée ayant la forme d'un disque plat.

11. L'emploi de la membrane microporeuse supportée suivant l'une des revendications 1 à 5,
la membrane microporeuse supportée formant un moyen isolant.

12. L'emploi suivant la revendication 11,
la membrane microporeuse supportée formant partie constituante de vêtements, notamment de vêtements d'hiver comme vêtements et sous-vêtements de ski.

**Patentansprüche**

1. Eine getragene mikroporöse Membran,
die einen Verbundstoff aus einer mikroporösen Membran und aus einem synthetischen, thermoplastischen, polymeren Vlies aus Mikrofasern aufweist, das an der Membran mit Hilfe von Wärmeeinwirkung ohne irgendeinen Zusatz von Klebstoffkomponenten angebracht ist,
dadurch gekennzeichnet, daß
die Mikrofasern auf der mikroporösen Membran in frisch extrudiertem und gerecktem Zustand und mit einer erhöhten Temperatur aufgebracht worden sind, die geringfügig über der Schmelztemperatur des thermoplastischen polymeren Materials liegt, das zur Erzeugung der Mikrofasern dient.

2. Die getragene mikroporöse Membran nach Anspruch 1,
dadurch gekennzeichnet, daß
das polymere Vlies aus Mikrofasern an der Membran mit einer Abziehfestigkeit (bestimmt nach ASTM D903) von wenigstens 2 Newton pro Meter angebracht ist; und
der aus dem Biegeversuch ermittelte Elastizitätsmodul der getragenen mikroporösen Membran um wenigstens 10 % größer ist als derjenige der Membran allein.

3. Die getragene mikroporöse Membran nach Anspruch 1 oder 2,
dadurch gekennzeichnet, daß
die mikroporöse Membran aus einem Material besteht, das ausgewählt ist aus Polyamiden, perfluorierten Polyolefinen, Polysulfonen, Polyvinylidenchloriden und Celluloseestern.

4. Die getragene mikroporöse Membran nach einem der Ansprüche 1 bis 3,
dadurch gekennzeichnet, daß
die mikroporöse Membran aus Polytetrafluorethylen, aus Polyvinylidendifluorid oder aus Nylon 66 besteht; und
die Mikrofasern aus einem Polyolefin, insbesondere aus Polypropylen bestehen.

5. Die getragene mikroporöse Membran nach einem der Ansprüche 1 bis 4,
dadurch gekennzeichnet, daß
der Verbundstoff auf beiden Seiten der mikroporösen Membran ein thermoplastisches polymeres Vlies aus Mikrofasern aufweist.

6. Ein Verfahren zur Herstellung einer getragenen mikroporösen Membran, die eine mikroporöse Membran aufweist, die an wenigstens einer Seite auf einem synthetischen, thermoplastischen, polymeren Vlies aus Mikrofasern abgestützt ist,
wobei das Vlies aus Mikrofasern an der Membran mit Hilfe von Wärmeeinwirkung ohne irgendeinen Zusatz von Klebstoffkomponenten angebracht ist,
gekennzeichnet durch nachstehende Verfahrensschritte:

16

(a) ein synthetisches, thermoplastisches, polymeres Material wird durch eine Spinndüse extrudiert, und das extrudierte polymere Material wird durch Einwirkung eines oder mehrerer Gasstroms/-ströme gereckt, um Mikrofasern zu erzeugen;

(b) diese Mikrofasern werden gegen eine Bahn aus der mikroporösen Membran gerichtet;

(c) die Mikrofasern kontaktieren die mikroporöse Membran, solange die Mikrofasern eine Temperatur aufweisen, die geringfügig über der Schmelztemperatur des thermoplastischen, polymeren Materials liegt, das zur Erzeugung der Mikrofasern verwendet wird; und

(d) der erhaltene Verbundstoff wird abgekühlt, um die getragene mikroporöse Membran zu erhalten.

7. Das Verfahren nach Anspruch 6,
dadurch gekennzeichnet, daß
das polymere Vlies aus Mikrofasern an der Membran mit der Maßgabe angebracht wird, daß eine Abziehfestigkeit (bestimmt nach ASTM D903) von wenigstens 2 Newton pro Meter erhalten wird, und daß die getragene mikroporöse Membran einen aus dem Biegeversuch ermittelten Elastizitätsmodul aufweist, der um wenigstens 10 % größer ist als derjenige der Membran alleine; und
die mikroporöse Membran aus einem Material besteht, das aus Polyamiden, perfluorierten Polyolefinen, Polysulfonen, Polyvinylidenchloriden und Celluloseestern ausgewählt wird.

8. Das Verfahren nach Anspruch 6 oder 7,
dadurch gekennzeichnet, daß
die mikroporöse Membran aus Polytetrafluorethylen, Polyvinylidendifluorid oder Nylon 66 ausgewählt wird; und
die Mikrofasern aus einem Polyolefin erzeugt werden.

9. Eine Anwendung der getragenen mikroporösen Membran nach einem der Ansprüche 1 bis 5, wobei die getragene mikroporöse Membran ein Filtriermedium eines Filterelementes bildet.

10. Die Anwendung nach Anspruch 9, wobei die getragene mikroporöse Membran die Gestalt einer ebenen Scheibe oder Platte hat.

11. Eine Anwendung der getragenen mikroporösen Membran nach einem der Ansprüche 1 bis 5, wobei die mikroporöse Membran ein isolierendes Medium bildet.

12. Die Anwendung nach Anspruch 11, wobei die getragene mikroporöse Membran einen Bestandteil von Bekleidung bildet, insbesondere von Winterbekleidung wie etwa Skiwäsche und Skibekleidung.